# EUROPÄISCHE PATENTSCHRIFT

(11) **EP 2 782 703 B1**
(45) Veröffentlichungstag und Bekanntmachung des Hinweises auf die Patenterteilung: **11.11.2020**
(21) Anmeldenummer: 12788450.0
(22) Anmeldetag: 19.11.2012
(51) Int. Cl.: B23K 101/00, B23K 15/00, F01D 5/00

(54) **VERFAHREN ZUR REPARATUR EINES GASTURBINENBAUTEILS**
REPAIR METHOD FOR TURBINE PARTS
MÉTHODE DE RÉPARATION DE PIÈCES DE TURBINE

(30) Priorität: 22.11.2011 DE 102011086831
(43) Veröffentlichungstag der Anmeldung: 01.10.2014
(73) Patentinhaber: Lufthansa Technik AG, 22335 Hamburg (DE)
(72) Erfinder: VOGEL, Christian, 22889 Tangstedt (DE); KASSNER, Holger, 22089 Hamburg (DE); GARTNER, Thomas, 22087 Hamburg (DE)
(74) Vertreter: Müller Verweyen
(86) Internationale Anmeldenummer: PCT/EP2012/004799
(87) Internationale Veröffentlichungsnummer: WO 2013/075815

(56) Entgegenhaltungen:
- EP-A1- 0 638 387
- EP-A1- 1 779 955
- WO-A1-2010/002295
- WO-A1-2011/035772
- DE-A1-102004 032 975
- US-A1- 2006 008 352
- US-A1- 2010 172 761

## Beschreibung

Die Erfindung betrifft ein Verfahren zur Reparatur eines Gasturbinenbauteils mit den Merkmalen des Oberbegriffs von Anspruch 1.

Es ist bekannt, bei Gasturbinenbauteilen im Zuge von Reparaturen Teilstücke abzutrennen und diese durch Ersatzstücke zu ersetzen. Das Ersatzstück wird auch als SPAD (Spare Part Alternative Detail) bezeichnet. Insbesondere bei großen Bauteilen können so Kosten gespart werden, da kein komplett neues Bauteil benötigt wird und der beschädigte Bereich lokal ersetzt wird.

Problematischerweise sind die dabei entstehenden Trenn- bzw. Fügezonen - beispielsweise Schweißnähte, an denen die Ersatzteile mit dem Gasturbinenbauteil verbunden werden - oft Schwachstellen und weisen im Hinblick auf ein Neuteil eine reduzierte Festigkeit in der Fügezone auf. Wenn den hohen luftfahrtrechtlichen Anforderungen an die Bauteilfestigkeit bzw. an das Reparaturverfahren nicht gerecht werden kann, beispielsweise weil die Schweißzone in einem besonders festigkeitskritischen Bereich liegen würde, ist der Kauf eines Neuteils oft die einzige Option. Insbesondere sind Schweißreparaturen bei Schmiedebauteilen für Anwendungen in der Luftfahrt oft nicht zulässig.

Schmiedebauteile weisen üblicherweise eine feinkörnige Mikrostruktur auf, die hinsichtlich ihrer Festigkeits- und Verformungseigenschaften vorteilhaft ist. Im Gegensatz dazu weisen die gegossenen Bauteile gegenüber den geschmiedeten Bauteilen in der Regel eine gröbere Kornstruktur und somit in der Regel schlechtere Festigkeits- und Verformungseigenschaften auf.

Das Schweißen von Schmiedebauteilen führt aufgrund der hohen eingebrachten Temperaturen und aufgrund des Aufschmelzens von Grundwerkstoff dazu, dass die feinkörnige Struktur zum Teil aufgelöst oder zumindest durch temperaturinduzierte Grobkornbildung in der Wärmeeinflusszone geschwächt wird.

In der DE 10 2004 032 975 A1 , die den Oberbegriff von Anspruch 1 offenbart, ist ein Verfahren zum Verbinden von Schaufelblättern mit Schaufelfüßen offenbart, bei welcher an einer späteren Trennstelle zwischen einem Schaufelblatt und einer Rotorscheibe eine Aufdickung durch Laserpulverauftragsschweißen gebildet wird, wobei das verdickte Material nach dem Zusammenfügen wieder entfernt wird.

Aus der WO 2011/ 035772 A1 ist ein Verfahren bekannt, bei dem eine Aufdickung nach dem Trennvorgang vorgenommen wird und die Aufdickung nach dem Zusammenfügen wieder entfernt wird.

Aus der US 2010/0172761 A1 ist es bekannt ein Schaufelblatt im Bereich einer Verdickung mit einem Rotor zu verbinden, wobei eine Verdickung bereits herstellungsbedingt vorhanden ist.

Aus der EP 0 638 387 A1 ist ein Reparaturverfahren für Schaufelblätter bekannt, bei dem an einer möglichst geraden Reparaturfläche eine die Profilhöhe des Schaufelblatts übersteigende Reparaturplatte per Stumpfschweißen angebracht wird und diese Reparaturplatte anschließend auf die Profilkontur des Schaufelblattes abgearbeitet wird.

Der Erfindung liegt demnach die Aufgabe zugrunde, ein Verfahren zur Reparatur eines Gasturbinenbauteils bereitzustellen, bei dem die mit der Reparatur verbundene Bauteilschwächung reduziert bzw. kompensiert werden kann.

Zur Lösung der Aufgabe wird ein Verfahren zur Reparatur eines Gasturbinenbauteils gemäß Anspruch 1 vorgeschlagen.

Bei dem Trennbereich handelt es sich um einen vordefinierten Bereich.

Durch die Erhöhung der Querschnittsfläche im Trennbereich kann die Schwächung des Materials durch den Schweißprozess kompensiert werden. Da eine Verschlechterung der Materialeigenschaften durch den Schweißprozess bzw. die eingebrachte Wärme nicht gänzlich vermieden werden kann, wird durch die Querschnittserhöhung mehr Material hinzugefügt, um der Schwächung entgegenzuwirken.

Die Querschnittsfläche wird bevorzugt um maximal 50 %, vorzugsweise um maximal 30 %, weiter bevorzugt um maximal 20 %, erhöht.

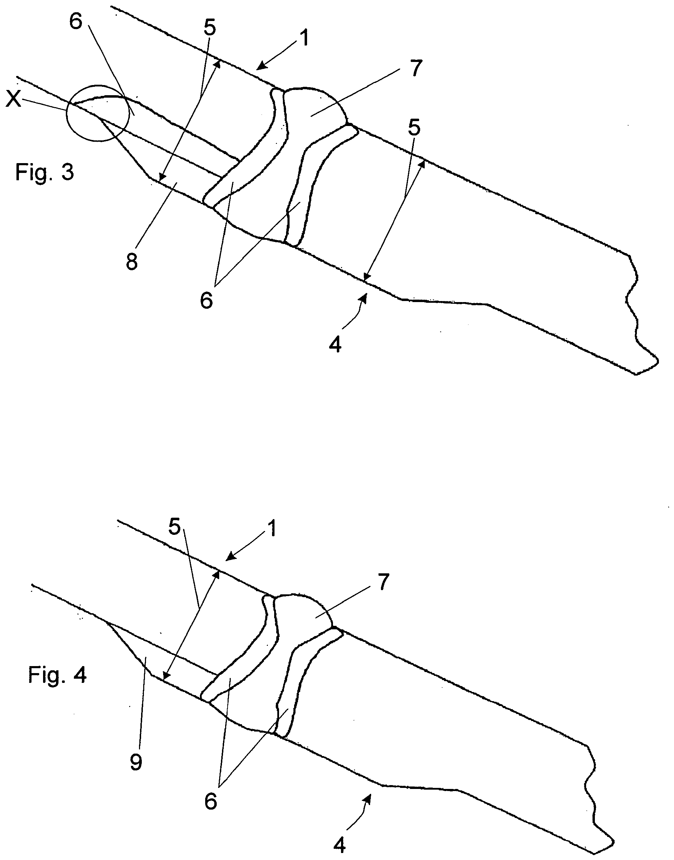

Dabei eignet sich jedoch nicht jedes Verfahren zur Applikation von zusätzlichem Material, sondern bevorzugt kommen Verfahren zum Einsatz, die mit möglichst wenig Temperatureintrag in den Grundwerkstoff verbunden sind. Beispielsweise ist Laserauftragsschweißen aufgrund des hohen Temperatureintrags nicht geeignet, wohingegen das Kaltspritzverfahren das erfindungsgemäße Applikationsverfahren darstellt. Der Einfluss des Auftragsverfahrens auf die Mikrostruktur und die damit verbundenen unterschiedlichen Festigkeitseinflüsse werden an späterer Stelle unter Zuhilfenahme der Figuren 3 und 4 näher verdeutlicht. Vorzugsweise entspricht die Querschnittsfläche des zu verbindenden Randes des Ersatzstückes an seinem Schweißstoß im Wesentlichen der erhöhten Querschnittsfläche am Trennbereich des Gasturbinenbauteils. Somit weist das Ersatzstück auch vorzugsweise eine erhöhte Querschnittsfläche auf. Beide Bauteile weisen an dem Schweißstoß in etwa gleiche Geometrien auf, um so in einfacher Weise verschweißt werden zu können. Durch gleiche bzw. ähnliche Querschnittsflächen ist der Spannungsverlauf des Bauteils auch homogener, da keine Spalte oder Sprünge in der Wandungs- bzw. Materialdicke auftreten.

Das Reparaturverfahren findet bevorzugt Anwendung, wenn das Gasturbinenbauteil und das Ersatzstück Schmiedebauteile sind. Demnach weisen das Gasturbinenbauteil und das Ersatzstück bevorzugt ein Mikrogefüge mit Schmiedestruktur auf. Wie bereits beschrieben, ist eine Schmiedestruktur besonders empfindlich gegenüber hohen Temperatureinflüssen, da die Temperatureinflüsse beispielsweise zu einem ungewünschten Kornwachstum führen können und das Material so geschwächt wird. Da bei dem erfindungsgemäßen Verfahren wenig thermische Energie in das Gasturbinenbauteil eingebracht wird, kann das Feinkorngefüge seine vorteilhaften Eigenschaften weitestgehend beibehalten. Durch die Verstärkung der Materialdicke im Fügebereich kann erreicht werden, dass das Gasturbinenbauteil nach der Reparatur den benötigten Festigkeitsanforderungen gerecht wird.

Das Verfahren ist bevorzugt für Gasturbinenbauteile geeignet, bei denen die Wandstärke an dem Trennbereich in einem Bereich zwischen 1 mm und 20 mm, vorzugsweise in einem Bereich zwischen 3 mm und 12 mm, liegt. Beispielsweise können große Strukturbauteile aus Nickelbasis- oder Kobaltbasiswerkstoff durch das Verfahren repariert werden. Vorzugsweise handelt es sich bei dem Gasturbinenbauteil um ein Hoch- oder Niederdruckturbinenbauteil oder ein Brennkammerbauteil eines Flugzeugtriebwerks, da das beschriebene Verfahren für diese Bauteile gut geeignet ist.

Erfindungsgemäß umfasst das thermische Spritzverfahren ein Kaltgasspritzverfahren. Das Kaltgasspritzverfahren ist das bevorzugte Verfahren zur Applikation von Zusatzmaterial am Trennbereich. Es ist mit relativ wenig Temperatureinfluss verbunden. Vorzugsweise wird der Grundwerkstoff des Gasturbinenbauteils durch das thermische Spritzverfahren demnach auch nicht aufgeschmolzen. Das Kaltgasspritzen ist ein Beschichtungsverfahren, bei dem der Beschichtungswerkstoff in Pulverform mit sehr hoher Geschwindigkeit auf das Trägermaterial, hier das Gasturbinenbauteil, aufgebracht wird. Dazu wird ein auf wenige hundert Grad Celsius aufgeheiztes Prozessgas durch Expansion in einer Lavaldüse auf Überschallgeschwindigkeit beschleunigt und anschließend die Pulverpartikel in den Gasstrahl injiziert. Die injizierten Spritzpartikel werden dabei auf eine so hohe Geschwindigkeit beschleunigt, dass sie im Gegensatz zu anderen thermischen Spritzverfahren auch ohne vorangehendes An- oder Aufschmelzen beim Aufprall auf das Substrat eine dichte und fest haftende Schicht bilden. Ein Vorteil des Verfahrens ist, dass als Haftmechanismus des Pulverzusatzwerkstoffs nicht die mechanische Verkrallung, sondern der Kaltschweißeffekt wirkt. Beim Kaltschweißeffekt verbinden sich die Fügepartner stoffschlüssig unterhalb ihrer Schmelztemperaturen. Vorzugsweise erfolgt das Kaltschweißen unterhalb der Rekristallisationstemperatur der Einzelteile. Die mit dem Kaltspritzverfahren aufgebrachten Schichten zeichnen sich durch eine hohe Poren- und Oxidationsfreiheit aus. Neben dem Kaltspritzverfahren können vorzugsweise auch andere thermische Spritzverfahren, wie das Hochgeschwindigkeitsflammspritzen (z.B. HVOF, HVAF) oder das Niederdruckplasmaspritzen (z.B. LPPS, LVPS, VPS) eingesetzt werden.

Vorzugsweise wird vor dem Abtrennen des Teilstückes ein Diffusionsglühen des Gasturbinenbauteils bei Lösungsglühtemperatur des Gasturbinenbauteils durchgeführt. Durch das Diffusionsglühen können Gefügeinhomogenitäten reduziert und so die Materialeigenschaften verbessert werden, was sich insgesamt positiv auf die Reparatur auswirkt.

Vorzugsweise liegt die Lösungsglühtemperatur in einem Temperaturbereich von 900°C bis 1150°C. Weiter bevorzugt ist ein Lösungsglühen in einem Temperaturbereich von 950° bis 1050°C. Derartige Temperaturen sind erfahrungsgemäß mit guten Ergebnissen verbunden.

Vorzugsweise erfolgt nach dem Schweißvorgang ein Lösungsglühen und/oder ein Spannungsarmglühen des reparierten Gasturbinenbauteils. Ferner erfolgt bevorzugt nach dem Schweißvorgang eine Auslagerungswärmebehandlung des Gasturbinenbauteils. Durch die Wärmebehandlungsverfahren werden die Materialeigenschaften des reparierten Gasturbinenbauteils verbessert, so dass sie vorzugsweise den geforderten bzw. den ursprünglichen mechanisch-technologischen Eigenschaften eines Neuteils entsprechen.

Erfindungsgemäß erfolgt das Schweißen durch einen Elektronenstrahl oder Laser-, WIG-, WPS-, WPL-, WPSL-Schweißen (WIG: Wolfram Inertgas; WPS: Wolfram Plasma Strahl; WPL: Wolfram Plasma Lichtbogen; WPSL: Wolfram Plasma Strahl Lichtbogen).

Die Erfindung wird im Folgenden anhand bevorzugter Ausführungsformen unter Bezugnahme auf die beigefügten Figuren erläutert. Dabei zeigt:
- Fig. 1: eine Schnittdarstellung eines Niederdruckturbinengehäuses;
- Fig. 2: eine Schnittansicht einer Verbindungsschweißung in einem unkritischen Bauteilbereich nach dem Stand der Technik;
- Fig. 3: eine Schnittansicht einer Verbindungsschweißung mit einer Laserauftragsschweißung;
- Fig. 4: eine Schnittansicht einer Verbindungsschweißung mit einem Kaltgasspritzauftrag;
- Fig. 5: ein Gasturbinenbauteil mit erhöhter Wandstärke durch ein thermisches Spritzverfahren;
- Fig. 6: das Gasturbinenbauteil mit abgetrenntem Teilstück;
- Fig. 7: das Gasturbinenbauteil mit angeschweißtem Ersatzstück; und
- Fig. 8: das nachbearbeitete Gasturbinenbauteil mit angeschweißtem Ersatzstück.

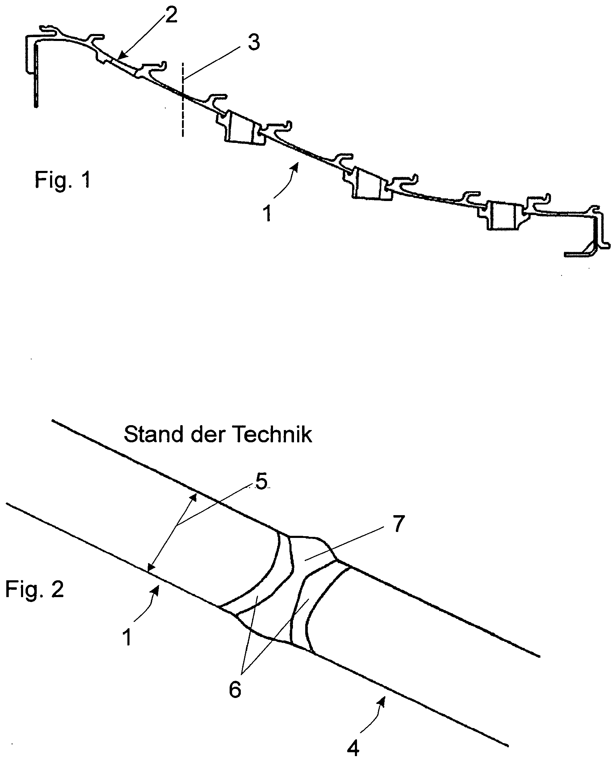

In der Figur 1 ist ein Schnitt durch ein Gasturbinenbauteil 1, hier ein Niederdruckturbinengehäuse, dargestellt. In diesem Ausführungsbeispiel soll das Teilstück 2 aufgrund von Rissbildung vom Rest des Gasturbinenbauteils 1 abgetrennt und durch ein Ersatzstück 4 repariert werden.

Das Gasturbinenbauteil 1 ist ein geschmiedetes Bauteil und weist eine feinkörnige Mikrostruktur auf. Beispielsweise kann die Korngröße nach ASTM Standard No. 3, oder feiner nach ASTM Standard E112 bemessen sein. Ein einfaches Stoß-an-Stoß-Anschweißen des Ersatzstücks 4 wäre zwar möglich, jedoch aus luftfahrtrechtlichen Gründen nicht zulässig, da der Fügebereich eine zu große Schwachstelle darstellen würde.

Wie in der Figur 2 dargestellt, ist es aus dem Stand der Technik zwar bekannt, ein Ersatzstück 4 an ein Gasturbinenbauteil 1 anzuschweißen, jedoch ist der Schmelzschweißbereich 7 hinsichtlich seines Mikrogefüges gegenüber dem Grundwerkstoff des Gasturbinenbauteils 1 und des Ersatzstückes 4 - welches vorzugsweise ebenfalls eine feinkörnige Mikrostruktur aufweist - unterlegen. Das Gefüge im Schmelzschweißbereich 7 ist in der Regel deutlich grobkörniger und weist oft Schweißspannungen auf. Auch die Region um den Schmelzschweißbereich 7 - die Wärmeeinflusszone 6 - die zwar nicht aufgeschmolzen wurde, jedoch trotzdem nachteilhaft von dem Schweißvorgang beeinflusst wurde, stellt eine Schwachstelle dar. Durch die eingebrachte Wärme kann es hier zu einem Kornwachstum kommen, wodurch die feinkörnige Schmiedestruktur des Gasturbinenbauteils 1 bzw. des Ersatzstückes 4 vergröbert und die Materialeigenschaften sich dadurch verschlechtern.

Eine Reparatur mit einer Schweißung gemäß der Figur 2 ist somit aus luftfahrtrechtlichen Gründen bzw. aufgrund der hohen Anforderungen an die Festigkeit des Gasturbinenbauteils 1 nicht zulässig bzw. nur auf Basis von sehr aufwendigen FEM-Simulationen für alle Lastfälle zulassbar.

Um die Schwachstelle zu verstärken, wird in der Figur 3 eine Schweißung mit besonderem Schweißstoß dargestellt. Die Schwachstelle um den Schmelzschweißbereich 7 und die Wärmeeinflusszone 6 ist verdickt. Das Ersatzstück 4 weist in dem Bereich eine erhöhte Wandstärke 5 auf, und auch das Gasturbinenbauteil 1 wurde mit einem Laserschweißauftrag 8 an der Fügezone versehen, um die Querschnittsfläche bzw. die Wandstärke zu erhöhen. Jedoch führt der Laserschweißauftrag 8 dazu, dass eine weitere Wärmeeinflusszone 6 ausgebildet wird, welche den Bereich des Laserschweißauftrags 8 umgibt und das Gasturbinenbauteil 1 im Bereich des Auslaufs (Fig. 3; Bereich X) weiter schwächt.

Durch den nachteilhaften Einfluss des Laserschweißens auf das Gasturbinenbauteil 1 ist auch eine Reparatur gemäß der Figur 3 aus luftfahrtrechtlichen Gründen bzw. aufgrund der hohen Anforderungen an die Festigkeit des Gasturbinenbauteils 1 nicht zulässig.

Die Figur 4 zeigt eine Schweißung, bei der die Querschnittsfläche durch Aufbringen in einem thermischen Spritzverfahren erhöht wurde. In diesem Fall wurde durch Kaltgasspritzen ein Kaltgasspritzauftrag 9 auf das Gasturbinenbauteil 1 aufgebracht, bevor es mit dem Ersatzstück 4 verschweißt wurde. Zwar bilden sich um den Schmelzschweißbereich 7 Wärmeeinflusszonen 6 aus, ihre nachteilige Wirkung wird jedoch durch die erhöhte Wandstärke 5 kompensiert. Da der Kaltgasspritzauftrag 9 zu keiner weiteren Verschlechterung des Materialgefüges im Gasturbinenbauteil 1 führt, kann die Reparatur den luftfahrtrechtlichen Anforderungen an die Bauteilfestigkeit gerecht werden.

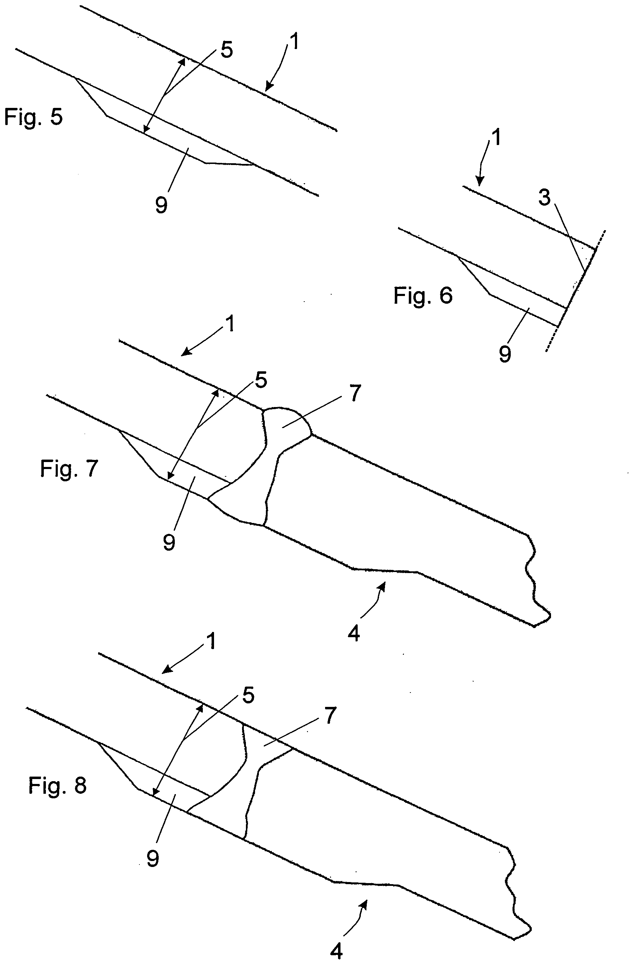

Anhand der Figuren 5 bis 8 sind einzelne Schritte eines Verfahrens dargestellt. In dem im Folgenden beschriebenen, insoweit nicht unter die Erfindung fallenden Ausführungsbeispiel ist das Aufbringen des Kaltgasspritzauftrags 9 vor dem Abtrennen des Teilstücks 2 beschrieben. Erfindungsgemäß wird der Kaltgasspritzauftrag 9 jedoch im Anschluss an den Schweißvorgang aufgebracht, wodurch die Querschnittsfläche im Anschluss an den Schweißvorgang vergrößert wird. Ein Vorteil des nachträglichen Aufbringens des Kaltgasspritzauftrags 9 ist, dass dünnere Strukturen mit einem verhältnismäßig geringen Wärmeeintrag schweißbar sind, und darüber hinaus unter Umständen ein Nacharbeiten der Bauteile nicht mehr notwendig ist. Zunächst wird dabei von einem Gasturbinenbauteil 1 ausgegangen, bei dem schadhafte Bereiche festgestellt worden sind. Bei bestimmten Werkstoffen wird dann als erster Schritt ein Lösungsglühen des zu reparierenden Bauteils durchgeführt, insbesondere bei ausscheidungshärtbaren Legierungssystemen, wie beispielsweise der Nickelbasislegierung Inconel 718 oder der sogenannten Speziallegierung Waspaloy®.

Als Nächstes erfolgt ein Vorbereiten der zu beschichtenden Bauteiloberflächen durch ein geeignetes Oberflächenveredelungsverfahren, beispielsweise Aufrauen mittels Wasserhochdruck, mittels eines Lasers oder mittels Festkörper.

Anschließend wird durch ein thermisches Spritzverfahren, wie beispielsweise Hochgeschwindigkeitsflammspritzen oder Niederdruckplasmaspritzen, vorzugsweise jedoch durch Kaltgasspritzen, die Wandstärke bzw. die Querschnittsfläche des Gasturbinenbauteils 1 - wie in der Figur 5 dargestellt - erhöht.

Im Anschluss an das Verdicken erfolgt optional ein Diffusionsglühen bei Lösungsglühtemperatur des Legierungssystems.

Das darauf folgende Abstechen des defekten Teilstücks 2 an dem Trennbereich 3 ist in der Figur 6 dargestellt. Das abgetrennte Teilstück weist demnach auch noch einen Teil des Kaltgasspritzauftrags auf. An diesem abgetrennten Bereich ist es dann im Folgenden möglich und bevorzugt, eine Kontrolle der Schichtqualität durchzuführen. Beim Abstechen wird vorzugsweise in etwa in der Mitte des Kaltgasspritzauftrags getrennt, so dass auf dem Gasturbinenbauteil 1 und auf dem Teilstück 2 jeweils eine Hälfte des Kaltgasspritzauftrags 9 verbleibt.

Als Nächstes folgt der Schweißschritt, bei dem ein Ersatzstück 4 mit dem Gasturbinenbauteil 1 verschweißt wird. Bevorzugt wird mittels eines Elektronenstrahls geschweißt. Das Ersatzstück 4 weist einen ähnlich verdickten Schweißstoß auf, so dass das Gasturbinenbauteil 1 und das Ersatzstück 4 zumindest in der Fügezone im Wesentlichen eine symmetrische Geometrie aufweisen.

Im Anschluss an den Schweißvorgang kann bei Bedarf ein erneutes Lösungsglühen oder Spannungsarmglühen erfolgen.

Darauf folgend kann das reparierte Gasturbinenbauteil 1, beispielsweise durch Fräs- oder Drehverfahren maschinell nachbearbeitet werden. In der Figur 8 ist ein nachbearbeitetes Gasturbinenbauteil 1 dargestellt, es weist eine ebene Außen- und Innenseite auf, die Spuren des Schweißverfahrens sind beseitigt und nur durch die erhöhte Wandstärke 5 erkennbar, dass es sich um ein repariertes Bauteil handelt.

Zur Einstellung der geforderten bzw. ursprünglichen mechanisch-technologischen Materialeigenschaften des Neuteils folgt vorzugsweise eine Auslagerungswärmebehandlung des reparierten Gasturbinenbauteils.

Im letzten Schritt wird durch eine zerstörungsfreie Werkstoffprüfung, beispielsweise durch Wirbel- und/oder Röntgen- und/oder Farbeindringprüfung, überprüft, ob das Gasturbinenbauteil 1 ordnungsgemäß verschweißt und wieder einsatzbereit ist.

So kann insbesondere sichergestellt werden, dass das reparierte Gasturbinenbauteil 1 auch für den Einsatz in der Luftfahrt geeignet ist und allen Forderungen an die Qualität der Reparaturschweißung bzw. an die Bauteilfestigkeiten gerecht wird.

### Bezugszeichenliste:

- 1: Gasturbinenbauteil
- 2: Teilstück
- 3: Trennbereich
- 4: Ersatzstück
- 5: Wandstärke
- 6: Wärmeeinflusszone
- 7: Schmelzschweißbereich
- 8: Laserschweißauftrag
- 9: Kaltgasspritzauftrag

## Patentansprüche

1. Verfahren zur Reparatur eines Gasturbinenbauteils (1) bei dem
- ein Teilstück (2) des Gasturbinenbauteils (1) an einem Trennbereich (3) abgetrennt wird und
- ein Ersatzstück (4) mit dem Gasturbinenbauteil (1) verschweißt wird, wobei das Schweißen durch einen Elektronenstrahl oder Laser-, Wolfram Inertgas-, Wolfram Plasma Strahl-, Wolfram Plasma Lichtbogen-, Wolfram Plasma Strahl Lichtbogen-Schweißen erfolgt, **dadurch gekennzeichnet, dass**
- die Querschnittsfläche des Gasturbinenbauteils (1) an dem Trennbereich (3) im Anschluss an den Schweißvorgang durch Aufbringen von zusätzlichem Material in einem Kaltgasspritzverfahren erhöht wird.

2. Verfahren nach Anspruch 1, **dadurch gekennzeichnet, dass** das Gasturbinenbauteil (1) und das Ersatzstück Schmiedebauteile sind.

3. Verfahren nach einem der vorangegangenen Ansprüche, **dadurch gekennzeichnet, dass** die Wandstärke (5) des Gasturbinenbauteils (1) an dem Trennbereich (3) in einem Bereich zwischen 1 mm und 20 mm liegt.

4. Verfahren nach einem der vorangegangenen Ansprüche, **dadurch gekennzeichnet, dass** die Wandstärke (5) des Gasturbinenbauteils (1) an dem Trennbereich (3) in einem Bereich zwischen 3 mm und 12 mm liegt.

5. Verfahren nach einem der vorangegangenen Ansprüche, **dadurch gekennzeichnet, dass** das Gasturbinenbauteil (1) ein Hoch- oder Niederdruckturbinenbauteil oder ein Brennkammerbauteil eines Flugzeugtriebwerks ist.

6. Verfahren nach einem der vorangegangenen Ansprüche, **dadurch gekennzeichnet, dass** vor dem Abtrennen des Teilstückes (2) ein Diffusionsglühen des Gasturbinenbauteils (1) bei Lösungsglühtemperatur des Gasturbinenbauteils (1) durchgeführt wird.

7. Verfahren nach Anspruch 6 **dadurch gekennzeichnet, dass** die Lösungsglühtemperatur in einem Temperaturbereich von 900°C bis 1150°C liegt.

8. Verfahren nach einem der vorangegangenen Ansprüche, **dadurch gekennzeichnet, dass** nach dem Schweißvorgang ein Lösungsglühen und/oder ein Spannungsarmglühen des reparierten Gasturbinenbauteils (1) erfolgt.

9. Verfahren nach einem der vorangegangenen Ansprüche, **dadurch gekennzeichnet, dass** nach dem Schweißvorgang eine Auslagerungswärmebehandlung des Gasturbinenbauteils (1) erfolgt.

## Claims

1. Method for repairing a gas turbine component (1), in which
- a part (2) of the gas turbine component (1) is separated at a separation region (3) and
- a replacement part (4) is welded to the gas turbine component (1), the welding being carried out by means of an electron beam or laser welding, tungsten inert gas welding, tungsten plasma beam welding, tungsten plasma arc welding or tungsten plasma beam arc welding, **characterized in that**
- the cross-sectional area of the gas turbine component (1) at the separating region (3) is increased following the welding process by applying additional material in a cold gas spraying process.

2. Method according to claim 1, **characterized in that** the gas turbine component (1) and the replacement part are forged components.

3. Method according to either of the preceding claims, **characterized in that** the wall thickness (5) of the gas turbine component (1) at the separating region (3) is in a range of between 1 mm and 20 mm.

4. Method according to any of the preceding claims, **characterized in that** the wall thickness (5) of the gas turbine component (1) at the separating region (3) is in a range of between 3 mm and 12 mm.

5. Method according to any of the preceding claims, **characterized in that** the gas turbine component (1) is a high-pressure or low-pressure turbine component or is a combustion chamber component of an aircraft engine.

6. Method according to any of the preceding claims, **characterized in that**, before the part (2) is separated, diffusion annealing of the gas turbine component (1) is carried out at the solution annealing temperature of the gas turbine component (1).

7. Method according to claim 6, **characterized in that** the solution annealing temperature is in a temperature range of from 900°C to 1150°C.

8. Method according to any of the preceding claims, **characterized in that** solution annealing and/or stress relief annealing of the repaired gas turbine component (1) is carried out after the welding process.

9. Method according to any of the preceding claims, **characterized in that** aging heat treatment of the gas turbine component (1) is carried out after the welding process.

## Revendications

1. Procédé de réparation d'un composant de turbine à gaz (1), dans lequel
- une pièce partielle (2) du composant de turbine à gaz (1) est séparée au niveau d'une zone de séparation (3) et
- une pièce de rechange (4) est soudée au composant de turbine à gaz (1), le soudage étant effectué par un soudage par faisceau d'électrons ou laser, un soudage au tungstène sous gaz inerte, un soudage au plasma avec arc non transféré, un soudage au plasma avec arc transféré, un soudage au plasma avec arc semi-transféré, **caractérisé en ce que**
- la surface de section transversale du composant de turbine à gaz (1) est augmentée au niveau de la zone de séparation (3) après l'opération de soudage par application de matériau supplémentaire dans un procédé de projection par gaz froid.

2. Procédé selon la revendication 1, **caractérisé en ce que** le composant de turbine à gaz (1) et la pièce de rechange sont des composants forgés.

3. Procédé selon l'une des revendications précédentes, **caractérisé en ce que** l'épaisseur de paroi (5) du composant de turbine à gaz (1) au niveau de la zone de séparation (3) se situe dans une plage comprise entre 1 mm et 20 mm.

4. Procédé selon l'une des revendications précédentes, **caractérisé en ce que** l'épaisseur de paroi (5) du composant de turbine à gaz (1) au niveau de la zone de séparation (3) se situe dans une plage comprise entre 3 mm et 12 mm.

5. Procédé selon l'une des revendications précédentes, **caractérisé en ce que** le composant de turbine à gaz (1) est un composant de turbine haute ou basse pression ou un composant de chambre de combustion d'un moteur d'avion.

6. Procédé selon l'une des revendications précédentes, **caractérisé en ce qu'**avant la séparation de la pièce partielle (2), on effectue un recuit de diffusion du composant de turbine à gaz (1) à la température de recuit de mise en solution du composant de turbine à gaz (1).

7. Procédé selon la revendication 6, **caractérisé en ce que** la température de recuit de mise en solution se situe dans une plage de température de 900 °C à 1150 °C.

8. Procédé selon l'une des revendications précédentes, **caractérisé en ce qu'**après l'opération de soudage, on effectue un recuit de mise en solution et/ou un recuit de détente du composant de turbine à gaz (1) réparé.

9. Procédé selon l'une des revendications précédentes, **caractérisé en ce qu'**après l'opération de soudage, on effectue un traitement thermique de durcissement par précipitation du composant de turbine à gaz (1).
